**Europäisches Patentamt**

**European Patent Office**

**Office européen des brevets**

(11) Veröffentlichungsnummer : **0 268 547 B2**

(12) **NEUE EUROPÄISCHE PATENTSCHRIFT**

(45) Veröffentlichungstag der neuen Patentschrift :
**19.08.92 Patentblatt 92/34**

(21) Anmeldenummer : **87730122.6**

(22) Anmeldetag : **08.10.87**

(51) Int. Cl.⁵ : **F16L 58/00, F16L 9/14,
C23C 22/02, C23C 22/78,
B05D 7/16, F16L 58/10**

(54) **Verfahren zum Ummanteln von Gegenständen aus Stahl mit Kunststoff.**

(30) Priorität : **18.11.86 DE 3639417**

(43) Veröffentlichungstag der Anmeldung :
**25.05.88 Patentblatt 88/21**

(45) Bekanntmachung des Hinweises auf die
Patenterteilung :
**31.01.90 Patentblatt 90/05**

(45) Bekanntmachung des Hinweises auf die
Entscheidung über den Einspruch :
**19.08.92 Patentblatt 92/34**

(84) Benannte Vertragsstaaten :
**AT BE CH FR GB IT LI NL**

(56) Entgegenhaltungen :
**EP-A- 0 057 823
EP-A- 0 112 277
EP-A- 0 149 461
EP-A- 0 198 144**

(56) Entgegenhaltungen :
**CH-A- 623 390
DE-A- 3 407 283
DE-A- 3 508 811
DE-B- 2 222 911
DE-B- 2 255 084**

(73) Patentinhaber : **MANNESMANN
Aktiengesellschaft
Mannesmannufer 2
W-4000 Düsseldorf 1 (DE)**

(72) Erfinder : **Meyer, Walter, Dr.-Ing.
Schillerstrasse 31
W-4100 Duisburg 46 (DE)**
Erfinder : **Stucke, Walter, Ing.
Portmannweg 8
W-4030 Ratingen (DE)**

(74) Vertreter : **Meissner, Peter E., Dipl.-Ing. et al
Patentanwaltsbüro Meissner & Meissner,
Herbertstrasse 22
W-1000 Berlin 33 (DE)**

EP 0 268 547 B2

Jouve, 18, rue Saint-Denis, 75001 PARIS

**Beschreibung**

Die Erfindung betrifft ein Verfahren zum Ummanteln von Gegenständen aus Stahl, insbesondere von Rohren, mit Kunststoff.

Es sind zahlreiche Verfahren bekannt, metallische Gegenstände, insbesondere Stahlrohre, die im Erdboden verlegt werden, mit einem dem Schutz gegen Korrosion dienenden Überzug aus einem thermoplastischen Kunststoff (z.B. Polyäthylen, polyvenylchlorid oder Polypropylen) zu versehen. Die Verbindung des Überzugs mit dem Stahlrohr erfolgt meistens durch Verkleben. Für das Überziehen der Rohre kann der Kunststoff bekanntlich in Form eines nahtlosen Schlauchs durch Extrudieren unter Verwendung einer ringförmigen Düse, durch die das Rohr hindurchgeführt wird, aufgebracht werden, nachdem die Rohroberfläche mit einem Klebstoff beschichtet worden ist. Es ist auch bekannt, den Kunststoff in Form eines Folienbandes schraubenlinienförmig um das Rohr zu wickeln oder ihn in Pulverform auf das Rohr aufzusprühen und anschließend aufzuschmelzen. Neben derartigen thermoplastischen Beschichtungen sind auch Beschichtungen aus Epoxyharz in einer Gesamtdicke von etwa 0,5 - 0,8 mm für die Zwecke des Korrosionsschutzes bekannt.

Um eine bessere Haftung der Kunststoffschicht auf der Stahlrohroberfläche zu erreichen, wurde in der EP-A 0 198144 vorgeschlagen, die Oberfläche von Stahlrohren nach der Reinigung durch Strahlen mit Stahldrahtkom zu chromatieren, vollständig zu trocknen und nach Erwärmung des Stahlrohres auf eine Temperatur von mindestens 200 °C mit Epoxyharz in einer Schichtdicke von mindestens 0,05 mm zu beschichten. Vor der Aushärtung des Epoxyharzes wird eine Schicht aus einem Athylencopolymerisat als Kleber auf die Epoxyharzschicht aufgebracht und anschließend mit einer Schicht aus Polyäthylen als äußere Deckschicht abgedeckt. Diese Maßnahmen führen zu einer wesentlichen Verbesserung des Widerstandes gegen Untenostung und einer Erhöhung der Schälfestigkeit unter Feuchtigkeitseinwirkung bei gleichzeitig erhöhter Temperatur.

Während die Haftung zwischen den einzelnen Kunststoffschichten sehr gut ist, stellt der Übergang von der Chromatschicht zur Kunststoffbeschichtung immer noch eine Schwachstelle dar.

Aufgabe der Erfindung ist es daher, ein Verfahren zum Ummanteln von Gegenständen aus Stahl anzugeben, bei dem die Haftung zwischen der Chromatschicht und der Kunststoffummantelung weiter verbessert ist.

Gelöst wird diese Aufgabe durch ein Verfahren mit den Merkmalen des Patentanspruchs 1 bzw. des Patentanspruchs 2. Vorteilhafte Weiterbildungen dieser Verfahren sind in den jeweiligen Unteransprüchen 3 - 8 angegeben.

Die Erfindung geht aus von der bekannten Chromatierung einer Stahl oberfläche vor der Auftragung der Epoxyharzschicht, die für eine eventuell nachfolgend darüber aufzubringende Thermoplastbeschichtung die Funktion eines Haftvermittlers übernimmt oder bei ausreichender Schichtdicke selbst bereits den Kunststoffschutz darstellt. Das in Form einer wässrigen Lösung aufgetragene Chromatierungsmittel führt zur Bildung einer Schicht von Eisenchromaten (Trockenschichtdicke vorteilhaft 0,0005 bis 0,0015 mm) und bewirkt dadurch eine weitgehende Passivierung der Stahloberfläche. Vor der Auftragung der Epöxyharzschicht muß die Stahloberfläche zur Vermeidung von Blasen unter der Beschichtung trocken sein. Da außerdem die Aushärtung der für derartige Korrosionsschutzbeschichtungen verwendeten Epoxyharze Temperaturen von über 170 °C erfordern, wurde nach dem Stand der Technik die Trocknungsbehandlung konsequenterweise mit der Erwärmung des zu beschichtenden Gegenstandes auf Verarbeitungstemperatur für die Epoxyharzbeschichtung verbunden.

Eine Erwärmung auf derartig hohe Temperaturen ohne Anwesenheit von Epoxyharzmolekülen führt, wie Untersuchungen gezeigt haben, zu einer Bindung der Chromate an das Eisen in Form einer temperaturstabilen Zwischenschicht, so daß die Chromate bezüglich einer nachfolgend aufgetragenen Epoxyharzbeschichtung praktisch nicht mehr reaktionsfähig sind.

Bei Verwendung eines Silikates als Bindemittel in dem wässrigen Chromatierungsmittel enthält eine derartig reaktionsunfähige Zwischenschicht insbesondere Chrom-Eisen-Silizium-Oxide. Ein auf diese Zwischenschicht aufgebrachtes Epoxyharz kann nur noch mit diesen Oxiden Bindungen eingehen; die für eine wesentliche Steigerung der Haftung der Harzschicht erwünschte Bindung zwischen Epoxyharz molekülen und den primär gebildeten Eisenchromaten und Siliziumverbindungen, die ihrerseits unmittelbar an das Eisen der stählernen Gegenstände gebunden sind, kann nicht mehr eintreten. Die Vorgehensweise nach dem Stand der Technik verhindert daher die Ausbildung "chemischer Brücken" zwischen Epoxyharz- und Eisenmolekülen über die genannten Eisenchromate und Siliziumverbindungen.

Mit der vorliegenden Erfindung wird demgegenüber eine stärkere Anbindung der Kunststoffschicht an die Stahloberfläche in Form chemischer Bindungskräfte mittels der eine "Brückenfunktion" übernehmenden primär gebildeten Eisenchromate und Siliziumverbindungen bewirkt. Hierzu ist vorgesehen, daß ein Stahlgegenstand nach einer gründlichen Reinigung durch Strahlen mit Stahldrahtkom mit dem z.B. ein Silikat als Bindemittel enthaltenden Chromatierungsmittel benetzt und anschließend getrocknet wird, wobei die Trockenschichtdicke der Chromatierung etwa 0,0005 - 0,0015 mm betragen sollte. Für das Trocknen wird der Gegen-

2

stand lediglich auf eine Temperatur von 105 - 130° erwärmt, so daß sichergestellt ist, daß keine Flüssigkeitsreste auf der Oberfläche verbleiben. Andererseits soll aber auch gewährleistet sein, daß die Epoxyharzschicht über die primär gebildeten Eisenchromate und die Siliziumverbindungen möglichst fest mit den Eisenmolekülen des Gegenstandes verbunden wird.

Um dies zu erreichen, wird die Kunststoffbeschichtung gemäß der Erfindung in der Weise vorgenommen, daß möglichst bald nach der Trocknung des Chromatierungsmittels, noch bevor durch weitere Erwärmung des Gegenstandes auf über 160 °C die Ausbildung einer temperaturstabilen Zwischenschicht (ohne ausreichende Menge reaktionsfähiger Eisenchromate und mit dem Eisen der Gegenstände verbundener Siliziumverbindungen) entstanden ist, mit dem Epoxyharz/Härter-Gemisch beschichtet wird. Die für die Härtung der Epoxyharzschicht und gegebenenfalls für die Auftragung thermoplastischer Anteile an der Kunststoffummantelung erforderliche Temperaturerhöhung (z.B. 170 - 240 °C) wird also erst entsprechend spät durchgeführt.

Das Auftragen der Epoxyharzschicht kann in einem einzigen Arbeitsgang vorgenommen werden. Vorteilhaft ist aber auch eine Vorgehensweise, bei der mindestens zwei Teilschichten aus unterschiedlichen Epoxyharz/Härter-Gemischen aufgebracht werden, wobei das für die erste Teilschicht vorgesehene bei relativ niedriger Härtetemperatur (z.B. unter 170 °C) reaktionsfähiger ist als das für die Restschicht. Dadurch läßt sich der erfindungsgemäß erforderliche Abstand von der Ausbildung einer thermisch stabilen Zwischenschicht, die zeit- und temperaturabhängig erfolgt, problemlos einhalten. Wichtig ist, daß die nächste Teilschicht jeweils aufgetragen wird, bevor die vorher gehende ausgehärtet ist, damit ein inniger Verbund erreicht wird. Die erste Teilschicht wird, solange die Temperatur des Gegenstandes für ein Aufschmelzen eines pulverförmigen Epoxyharz/Härter-Gemisches noch zu gering ist, mit Vorteil als flüssige Schicht aufgebracht. Teilschichten von 0,008 - 0,010 mm sind für die erste Teilschicht ausreichend. Insgesamt sollte die Epoxyharzschicht im Falle einer thermoplastischen Deckummantelung etwa 0,050 - 0,070 mm und im Falle einer Epoxyharz-Dickschichtisolierung etwa 0,5 - 0,8 mm dick sein.

Für die erfindungsgemäße Beschichtung ist als Epoxyharz ein Vorkondensatpulver gut geeignet, dessen Glasübergangstemperatur unter 80 °C (vorzugsweise bei 45 - 65 °C) liegt und das bei 200 °C innerhalb von 0,25 - 0,5 min aushärtet.

Damit die Epoxyharzschicht aushärtet, wird die Temperatur des Stahlgegenstandes vorteilhaft induktiv oder durch Heizstrahler weiter erhöht auf z.B. etwa 180 - 210 °C. Vor Beendigung der Aushärtung der Epoxyharzschicht muß ggf. die Aufbringung der Kleberschicht erfolgen, die aus einem Copolymerisat des als Deckschicht verwendeten thermoplastischen Kunststoffes, z.B. im Falle von Polyäthylen aus einem Äthylen-Copolymerisat besteht. Für das Aufbringen von Kleberschicht und äußerer Mantelschicht, die anstelle von Polyäthylen insbesondere aus Polypropylen bestehen kann, können die bekannten Vorgehensweisen (z.B. Pulverauftragung, Schlauchextrusion, Wickelverfahren) angewendet werden. Wesentlich ist, daß das erfindungsgemäße Verfahren für eine kontinuierliche Beschichtung von Stahlrohren, die zu einem "unendlichen" Strang aneinandergereiht werden, geeignet ist.

Anhand des nachfolgenden Beispiels für die Beschichtung von Stahlrohren wird die Erfindung näher erläutert.

In einer kontinuierlich betriebenen Kunststoffummantelungsanlage für Stahlrohre werden die zu einem "endlosen" Strang zusammengeschobenen Rohre nach dem Durchlaufen einer Stahlstrahl-Reinigungsstation in einer Chromatierstation mit einer 1 - prozentigen wässrigen Lösung aus 3- und 6-wertigen Chromverbindungen und einem Silikat als Bindemittel in der Weise benetzt, daß sich in der anschließenden Trocknung eine Trockenschichtdicke des Chromatierungsmittels von etwa 0,0008 mm ergibt. Zur Durchführung der Trocknung werden die Rohre induktiv auf etwa 110° C erwärmt. Danach wird bei dieser Temperatur auf die trockenen Rohre ein flüssiges Epoxyharz/Härter-Gemisch in einer etwa 0,010 mm dicken Teilschicht aufgetragen, wobei das Epoxyharz mit den primär gebildeten Eisenchromaten und mit an die Eisenmoleküle der Stahlrohre gebundenen Siliziumverbindungen reagiert.

Anschließend wird die Temperatur der Rohre weiter auf 190 °C induktiv erhöht und noch vor Beendigung der Aushärtung der Teilschicht ein Epoxyharz/Härter-Gemisch aus pulverförmigem Vorkondensat (Glasübergangstemperatur etwa 60 °C) elektrostatisch aufgesprüht. Das Pulvergemisch schmilzt auf und verbindet sich mit der ersten Teilschicht zu einer zusammenhängenden Epoxyharzschicht von mindestens 0,050 mm Dicke (Trockenschichtdicke). Unmittelbar vor ihrer abschließenden Ummantelung in einem Doppelspritzkopf mit einem thermoplastischen Doppelschlauch aus einer inneren 0,150 mm dicken Kleberschicht aus Äthylencopolymerisat und einer äußeren 1,8 mm dicken Polyäthylenschicht wird die Temperatur der Epoxyharzschicht durch Infrarotstrahler zur Beschleunigung der Aushärtung auf etwa 210 °C erhöht. Dabei ist jedoch sichergestellt, daß die thermoplastische Ummantelung noch vor Beendigung der Aushärtung aufgebracht ist und damit ein inniger Verbund zwischen Kleberschicht und Epoxyharzschicht entsteht.

Anschließend wird der Rohrstrang in einer Kühlstrecke mit Wasser auf Raumtemperatur abgekühlt, und die Stahlrohre werden wieder vereinzelt.

Die so beschichteten Rohre weisen unter Einwirkung von Wasser bei 65 °C nach ca. 1000 h eine Schälfestigkeit von 80-100 N/cm und einen Disbondingwert nach ASTM G 8 von 0 - 1 mm auf.

**Patentansprüche**

1. Verfahren zum kontinuierlichen Ummanteln von Gegenständen aus Stahl, insbesondere von Rohren mit thermoplastischem Kunststoff, wobei die Oberfläche der Gegenstände durch Strahlen mit Stahlkorn gereinigt und anschließend mit eine ein Bindemittel, insbesondere ein Silikat, enthaltenden wässrigen Lösung von 3- und/oder 6-wertigen Chromverbindungen chromatiert und bei erhöhter Temperatur getrocknet wird, bevor auf die erwärmten Gegenstände mindestens eine Schicht eines Epoxyharz/Härter-Gemisches in einer Gesamtdicke von mindestens 0,03 mm (Trockenschichtdicke) aufgetragen wird, und wobei vor Beendigung der Aushärtung des Epoxyharzes mindestens eine Klebeschicht aus einem Copolymerisat des als Deckschicht verwemdeten thermoplastischen Kunststoffes und danach in einer oder mehreren Teilschichten der thermoplastische Kunststoff aufgebracht wird und die ummantelten Gegenstände auf Raumtemperatur abgekühlt werden, dadurch gekennzeichnet, daß die Trocknung der Gegenstände bei einer Temperatur von 105 - 130 °C erfolgt und daß die Beschichtung mit dem Epoxyharz/Härter-Gemisch unmittelbar nach der Trocknung durchgeführt wird, noch bevor durch die für die Auftragung der Kleber- und Deckschicht erforderliche weitere Erwärmung der Gegenstände auf über 160 °C eine vollständige Umwandlungs des Chromatierungsmittels und der inzwischen gebildeten Chrom-Eisenverbindungen in eine thermisch stabile Zwischenschicht, insbesondere eine Chrom-Eisen-Silizium-Oxide enthaltende Zwischenschicht, stattgefunden hat.

2. Verfahren zum kontinuierlichen Ummanteln von Gegenständen aus Stahl, insbesondere von Rohren, mit Epoxyharz, wobei die Oberfläche der Gegenstände durch Strahlen mit Stahlkorn gereinigt und anschließend chromatiert und bei erhöht er Temperatur getrocknet wird, bevor auf die erwärmten Gegenstände das Epoxyharz/Härter-Gemisch in einer oder mehreren Schichten in einer Gesamtdicke von mindestens 0,5 mm ( Trockenschichtdicke) aufgetagen wird, und die Gegenstände danach auf Raumtemperatur abgekühlt werden, dadurch gekennzeichnet, daß die Trocknung der Gegenstände bei einer Temperatur von 105 - 130 °C erfolgt und daß die Beschichtung mit dem Epoxyharz/Härter-Gemisch unmittelbar nach der Trocknung durchgeführt wird, noch bevor die für die Aushärtung der Epoxyhazschicht erforderliche Erwärmung der Gegenstände auf über 160 °C eine vollständige Umwandlung des Chromatierungsmittels und der inzwischen gebildeten Chrom-Eisen-Verbindungen in eine thermisch stabile Zwischenschicht, insbesondere eine Chrom-Eisen-Silizium-Oxide enthaltende Zwischenschicht, stattgefunden hat.

3. Verfahren nach einem der Ansprüche 1-2, dadurch gekennzeichnet, daß das Epoxyharz/Härter-Gemisch in mindestens zwei Teilschichten aufgetragen wird, wobei der für die erste Teilschicht verwendete Harztyp bei Temperaturen unter 170 °C reaktionsfähiger ist als der für die Restschicht verwendete Harztyp, und daß die Gegenstände anschließend zur Aushärtung der gesamten Epoxyharzschicht auf 170 - 240 °C erwärmt werden.

4. Verfahren nach Anspruch 3, dadurch gekennzeichnet, daß das Epoxyhaz/Härter-Gemisch für die erste Teilschicht flüssig und das für die Restschicht pulverförmig aufgebracht wird.

5. Verfahren nach einem der Ansprüche 1 oder 3 - 4, dadurch gekennzeichnet, daß als thermoplasticher Kunststoff Polyäthylen verwendet wird.

6. Verfahren nach einem der Ansprüche 1 oder 3 - 4, dadurch gekennzeichnet, daß als thermoplasticher Kunststoff Polypropylen verwendet wird.

7. Verfahren nach einem der Ansprüche 1 oder 3 - 6, dadurch gekennzeichnet, daß die Epoxyharzschicht mindestens 0,05 mm, die Kleberschicht mindestens 0,15 mm und höchstens 0,3 mm und die thermoplastische Kunststoffschicht mindestens 1,5 mm dick aufgetragen werden.

8. Verfahren nach einem der Ansprüche 1 - 7, dadurch gekennzeichnet, daß die Trockenschichtdicke der aufgetragenen Chromatierung 0,0005 mm bis 0,0015 mm beträgt.

EP 0 268 547 B2

## Claims

1. Process for the continuous enveloping of objects made of steel, in particular pipes, with thermoplastic materials, wherein the surface of the objects is cleaned by spraying with steel grit and then chromised with an aqueous solution of 3-valent and/or 6-valent chromium compounds containing a binding agent, in particular a silicate, and is dried at elevated temperature before at least one layer of an epoxy resin/hardener mixture in a total thickness of at least 0.03 mm (dry layer thickness) is applied to the heated objects, and wherein before the epoxy resin has finished hardening at least one adhesive layer of a copolymer of the thermoplastic material used as the covering layer is applied, and thereafter the thermoplastic material is applied in one or more partial layers and the enveloped objects are cooled to room temperature,
characterised in that
the objects are dried at a temperature of 105 - 130°C and that coating with the epoxy resin/hardener mixture is carried out immediately after drying, before a complete conversion of the chromising agent and the chromium/iron compounds which have since been formed into a thermally stable intermediate layer, in particular an intermediate layer containing chromium/iron/silicon oxides, has taken place due to the further heating of the objects to above 160°C, which is necessary for the application of the adhesive layer and covering layer.

2. Process for the continuous enveloping of objects made of steel, in particular pipes, with epoxy resin, wherein the surface of the objects is cleaned by spraying with steel grit and then chromised and is dried at elevated temperature before the epoxy resin/hardener mixture is applied to the heated objects in one or more layers in a total thickness of at least 0.5 mm (dry layer thickness), and the objects are then cooled to room temperature,
characterised in that
the objects are dried at a temperature of 105 - 130°C and that the coating with the epoxy resin/hardener mixture takes place immediately after drying, before a complete conversion of the chromising agent and the chromium/iron compounds which have since been formed into a thermally stable intermediate layer, in particular an intermediate layer containing chromium/iron/silicon oxides, [due to] the heating of the objects to above 160°C, which is necessary for the hardening of the epoxy resin layer, has taken place.

3. Process according to one of Claims 1 - 2, characterised in that the epoxy resin/hardener mixture is applied in at least two partial layers, the resin type used for the first partial layer being more reactive at temperatures of below 170°C than the resin type used for the remaining layer, and in that the objects are then heated to 170-240°C in order to harden the entire epoxy resin layer.

4. Process according to Claim 3, characterised in that the epoxy resin/hardener mixture for the first partial layer is applied in liquid form and the one for the rest of the layer is applied in powder form.

5. Process according to one of Claims 1 or 3 - 4, characterised in that polyethylene is used as the thermoplastic material.

6. Process according to one of Claims 1 or 3 - 4, characterised in that polypropylene is used as the thermoplastic material.

7. Process according to one of Claims 1 or 3 - 6, characterised in that the epoxy resin layer is applied in a thickness of at least 0.05 mm, the adhesive layer in a thickness of at least 0.15 mm and at most 0.3 mm, and the thermoplastic material layer in a thickness of at least 1.5 mm.

8. Process according to one of Claims 1 - 7, characterised in that the dry layer thickness of the chromised coating applied is 0.0005 mm to 0.0015 mm.

## Revendications

1. Procédé pour le gainage continu d'objets en acier, en particulier de tubes, par une matière synthétique thermoplastique, la surface des objets étant nettoyée par grenaillage avec de la grenaille d'acier et, ensuite, chromatée avec une solution aqueuse comportant un liant, en particulier un silicate, de composés de chrome de valence 3 et/ou 6 et séchée à une température élevée, avant que, sur les objets chauffés, soit appliquée au moins une couche d'un mélange résine époxy/durcisseur en une épaisseur totale d'au moins 0,03 mm (épaisseur de couche sèche), et, avant l'achèvement du durcissement de la résine époxy, au moins une couche adhésive en un copolymérisat de la matière synthétique thermoplastique utilisée comme couche de revêtement et, ensuite, en une ou plusieurs couches partielles, la matière synthétique thermoplastique sont appliquées, et les objets gainés sont refroidis à la température ambiante, caractérisé en ce que le séchage des objets a lieu à une température de 105-130°C, et en ce que l'enrobage avec le mélange résine époxy/durcisseur est effectué directement après le séchage, avant que n'ait eu lieu, par le chauffage ultérieur des objets, nécessaire pour l'application de la couche adhésive et de la couche de revêtement, à plus de 160°C, une transformation

5

complète du milieu de chromatation et des composés chrome-fer formés entre-temps, en une couche intermédiaire thermiquement stable, en particulier une couche intermédiaire comportant des oxydes de chrome-fer-silicium.

2. Procédé pour le gainage continu d'objets en acier, en particulier de tubes, avec une résine époxy, la surface des objets étant nettoyée par grenaillage avec de la grenaille d'acier et, ensuite, chromatée et séchée à une température élevée, avant que, sur les objets chauffés, le mélange résine époxy/durcisseur soit appliqué en une ou plusieurs couches en une épaisseur totale d'au moins 0,5 mm (épaisseur de couche sèche), et les objets sont ensuite refroidis à la température ambiante,
caractérisé en ce que le séchage des objets a lieu à une température de 105-130°C, et en ce que l'enrobage avec le mélange résine époxy/durcisseur est effectué directement après le séchage, avant que n'ait eu lieu, par le chauffage des objets, nécessaire pour le durcissement de la couche de résine époxy, à plus de 160°C, une transformation complète du milieu de chromatation et des composés chrome-fer formés entre-temps, en une couche, intermédiaire thermiquement stable, en particulier une couche intermédiaire contenant des oxydes de chrome-fer-silicium.

3. Procédé selon une des revendications 1 ou 2,
caractérisé en ce que le mélange résine époxy/durcisseur est appliqué en au moins deux couches partielles, le type de résine utilisé pour la première couche partielle, pour des températures au-dessous de 170°C, étant plus réactif que le type de résine utilisé pour la couche restante, et en ce que les objets, successivement au durcissement de la couche de résine époxy dans son ensemble, sont chauffés à une température de 170-240°C.

4. Procédé selon la revendication 3,
caractérisé en ce que le mélange résine époxy/durcisseur est appliqué, pour la première couche partielle, sous forme liquide et le mélange pour la couche restante sous forme pulvérulente.

5. Procédé selon une des revendications 1 ou 3-4
caractérisé en ce que, en tant que matière synthétique thermoplastique, on utilise du polyéthylène.

6. Procédé selon une des revendications 1 ou 3-4,
caractérisé en ce que, en tant que matière synthétique thermoplastique, on utilise du polypropylène.

7. Procédé selon une des revendications 1 ou 3-6,
caractérisé en ce que la couche de résine époxy est appliquée en une épaisseur d'au moins 0,05 mm, la couche adhésive en une épaisseur d'au moins 0,15 mm et au plus de 0,3 mm et la couche de matière synthétique thermoplastique en une épaisseur d'au moins 1,5 mm.

8. Procédé selon une des revendications 1-7,
caractérisé en ce que l'épaisseur de la couche sèche du milieu de chromatation appliqué s'élève entre 0,0005 mm et 0,0015 mm.